# EUROPEAN PATENT SPECIFICATION

(11) **EP 2 614 893 B1**
(45) Date of publication and mention of the grant of the patent: **15.11.2017**
(21) Application number: 13150739.4
(22) Date of filing: 10.01.2013
(51) Int. Cl.: B03C 1/28, B01D 35/06

(54) **Magnetic separator of impurities for heating and/or cooling plants**
Magnetabscheider von Unreinheiten in Heiz- oder Kühlanlagen
Séparateur magnétique d'impuretés pour installations de chauffage ou de refroidissement

(30) Priority: 13.01.2012 IT MI20120033
(43) Date of publication of application: 17.07.2013
(73) Proprietor: Far Rubinetterie S.P.A., 28024 Gozzano (NO) (IT)
(72) Inventor: Allesina, Guerrino, 28020 Gozzano (IT)
(74) Representative: Candito, Rocco

(56) References cited:
- EP-A2- 2 174 718
- WO-A1-83/03207
- AU-B3- 549 427
- DE-C1- 19 833 293
- US-A- 4 585 553
- US-A- 5 089 129
- US-A- 5 217 610
- US-A- 5 468 381
- US-A- 5 702 598
- US-A1- 2002 195 382
- US-A1- 2003 116 493

## Description

The present invention relates to a magnetic separator of impurities, which is suitable for being used in a heating and/or cooling plant in order to separate ferrous and non-ferrous particles from a thermal fluid circulating in the above-mentioned plant.

It is known that, in thermal plants of both household and industrial types, solid bodies or particles enter circulation, being transported by the thermal fluid, these solid bodies or particles being due to dirt within the plants and/or due to corrosion of tubes, radiators, or other components, whereby such a corrosion causes the generation and release of rust.

These bodies or particles of dirt and rust tend to build up in critical parts of the plant, for example, at valves and/or fluid circulation pumps, causing several problems. In order to separate the above-mentioned bodies or particles, suitable separation devices are used. A first type of magnetic separator is known, comprising a container provided with an inlet and an outlet for the fluid circulating in the heating plant, the container defining a separation chamber for the particles, within which a magnetic bar extends that, during operation, is intended to be immersed in the thermal fluid, therefore, in direct contact with the latter. The magnetic bar extends along a longitudinal axis of the separation chamber, and it is removably fixed to the container. The magnetic bar projects downwardly into the separation chamber starting from a higher zone of the container, so as to be located in the region most affected by the thermal fluid flow.

Particularly, an upper end of the magnetic bar is fixed to a removable lid that is screwed to an upper edge portion of the above-mentioned container. The magnetic bar is periodically extracted to remove the ferrous particles that are magnetically held thereby.

A drawback of the above-mentioned device is that, in order to remove the ferrous particles adhered to the magnetic bar, it is necessary to extract the latter by unscrewing the lid, thus opening the container. Therefore, before performing the removal operations of the ferrous particles, it is necessary to stop the circulation of the thermal fluid passing through the separator, and this compels to arrange suitable fluid control valves upstream and downstream the separator. Furthermore, the above-mentioned separator is not capable of holding non-ferrous particles.

A second type of separator device is known, which comprises a container defining a separation chamber, and provided with, in an upper region, an inlet and an outlet for the thermal fluid. The device is provided with one or more magnets that are removably housed in one or more respective nonmagnetic tubular cases projecting in an integral manner from an upper portion of the container, downwardly, into the separation chamber and parallel to a longitudinal axis of the latter. The magnets, during the normal operation of the plant, are housed in the respective cases and extend by projecting from a higher zone of the container downwardly. The cases, and therefore the magnets, are positioned so as to be located in a region as much affected and passed through by the thermal fluid flow as possible, in order to intercept the ferrous particles and to attract them by the generated magnetic field.

The tubular cases prevent the magnets from directly contacting the circulating fluid, and allow extracting the magnets without having to open the device. When the magnets are pulled out from the respective tubular cases, the ferrous particles, which are not held by the magnetic force anymore, detach from the tubular cases and fall towards the container bottom, where, through a lower discharge opening, are evacuated from the device. However, before withdrawing the magnets in order to remove the particles, it is necessary to stop the circulation of the thermal fluid that otherwise would drag therewith the particles which are not held on the cases by the magnetic force generated by the magnets anymore.

Both the above-mentioned first and second types of separator have the drawback to necessarily require the stop of the thermal fluid circulation in order to be able to remove the ferrous particles, due to the above-mentioned reasons.

DE 19833293C1 discloses a device comprising a cylindrical container of non-ferromagnetic material, on which an inlet for the fluid, arranged tangentially on an upper zone of the container wall, and an outlet arranged in a position adjacent to the inlet, but in a lower zone with respect to the latter, are provided. Particularly, the inlet and the outlet are placed in the same region with respect to a diametral plane passing through the container longitudinal axis. Therefore, the inlet and the outlet are located on the same side with respect to the above-mentioned diametral plane, but the outlet is obtained at a lower height than the inlet. Therefore, the device is configured so that the fluid entering the container flows according to a helicoidal path top to bottom. Therefore, the fluid tends to flow along the most peripheral zones of the container, taking a cycloid shape. The ferromagnetic particles that are present in the fluid, due to a centrifugal action, tend to reach the peripheral zones of the container cavity, thus skimming the wall of the latter. The device is provided with an electro-magnet mounted externally in a side position on the wall, at a height interposed between the inlet and the outlet. The electro-magnet is provided with a coil that, when it is passed through by an electric current, generates a magnetic field in order to attract thereto the ferromagnetic particles transported by the fluid. Therefore, the operation principle of such a device is based on the cyclonic forward movement of the fluid that tends to separate the magnetic particles from the fluid by a centrifugal action, allowing the subsequent attraction thereof towards the side wall in the proximity of the electro-magnet.

The progressive build-up of ferromagnetic particles in the electromagnetic attraction zone generates an agglomerate of sludge of ever-increasing dimensions and weight. Periodically, the electro-magnet is deactivated to stop the magnetic field, so that the agglomerate of magnetic particles, which is not held to the wall by the electromagnetic attraction force anymore, is free to fall by gravity towards the container bottom, to be evacuated through a suitable discharge outlet.

The cyclonic operational principle of the above-mentioned device involves that the fluid has to enter tangentially the container in order to be able to go forward in a cyclone mode. This requires that the container has width dimensions that are considerably larger than the fluid inlet and outlet sections, and this disadvantageously involves evident overall dimensions that are not always compatible with the assembling needs in the heating circuits. It is due to this reason that the device described in DE 19833293C1 is not very suitable to be mounted along a duct passed through by the main fluid flow of a heating circuit. Furthermore, since the separation and attraction operation of the magnetic particles occurs in a zone interposed between the inlet and the outlet, i.e., directly on the fluid main path, a decrease of the fluid speed in the container is required, in order to avoid that the fluid-dynamic action of the fluid drags therewith the particles by extracting them from the magnetic field, and this results in a disadvantageous decrease of the flow rate of the circulating fluid. Furthermore, the evacuation of the ferromagnetic particles may occur by discontinuing the electromagnetic field, and only when they have formed a consistent agglomerate of particles. On the contrary, it would be necessary to stop the circuit, otherwise, once the electromagnetic field has been removed, the fluid current would drag therewith the particles that are not held by the magnetic force anymore.

US4585553 discloses an apparatus for the removal of iron particles and other magnetic solids from printing ink. The apparatus includes a casing through which a liquid to be clarified flows. A plurality of straight bar magnets, mounted to the inside surface of a tubular sheath, are magnetically attached to the outer surface of the casing for creating magnetic fields within the casing for attracting magnetic solids contained in the liquid to the inside surface of the casing. The detachment of the magnets from the casing causes the separated solids to settle to the bottom of the casing for discharge through a drain port formed therein.
WO83/03207 discloses an arrangement for cleaning a liquid containing particles such as magnetite, iron shavings, rust etc. which can be attracted by magnetic fields and are contained in the liquid. The liquid is guided so as to traverse a magnetic field produced by a magnet. At least one body distributing the magnetic field in the liquid is provided in or near the flow path of the liquid and is designed as a removable plug combined with an aperture formed in the liquid container and a further body which distributes the magnetic field is orientated on the outside of the liquid container.

An object of the present invention is to improve the known magnetic separators of impurities and to provide a magnetic separator of impurities that is able to obviate the above-mentioned drawbacks.

Another object is to provide a magnetic separator of impurities that is versatile, easy to be used, and capable of allowing the evacuation of the ferrous and non-ferrous particles without having to necessarily stop the circulation of the thermal fluid flowing in the heating and/or cooling plant.

What has been set forth above is made possible by a magnetic separator of impurities as defined in claim 1.

Owing of the magnetic separator of impurities according to the invention, all the intrinsic drawbacks of the known devices described above are overcome.

Features and advantages of the present invention will be apparent from the following description and the appended drawings, which illustrate an exemplary, non-limiting embodiment thereof, in which:

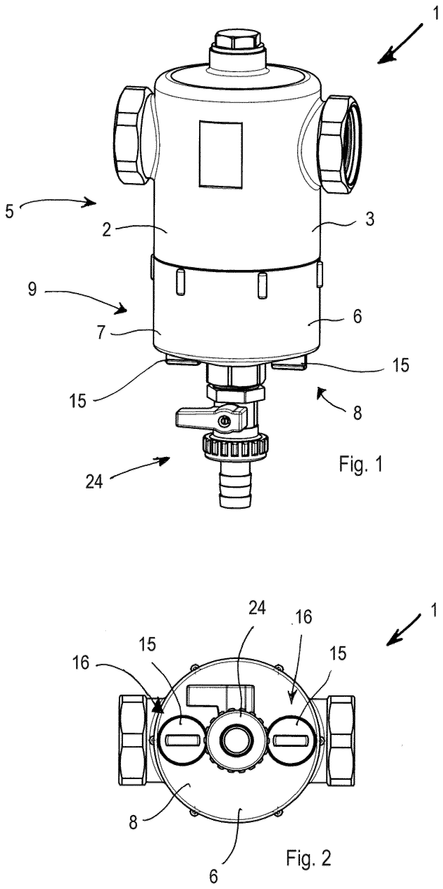

Fig. 1 is a perspective view of a magnetic separator of impurities according to the invention;
Fig. 2 is a bottom view of the magnetic separator of impurities in Fig. 1;
Fig. 3 is a partially exploded view of the magnetic separator of impurities in which magnet means are clearly visible;
Fig. 4 is an exploded view of magnet means of the magnetic separator of impurities;
Fig. 5 shows magnet means of the magnetic separator of impurities in an assembled configuration;

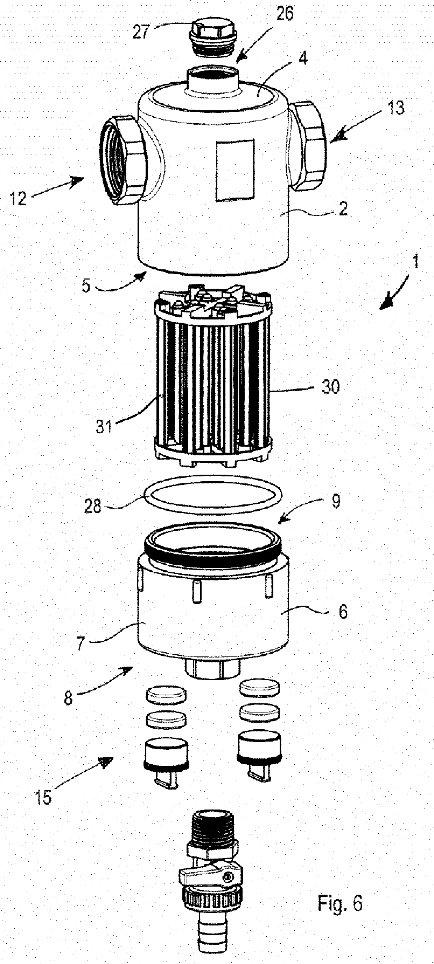

Fig. 6 is an exploded view of the entire magnetic separator of impurities;

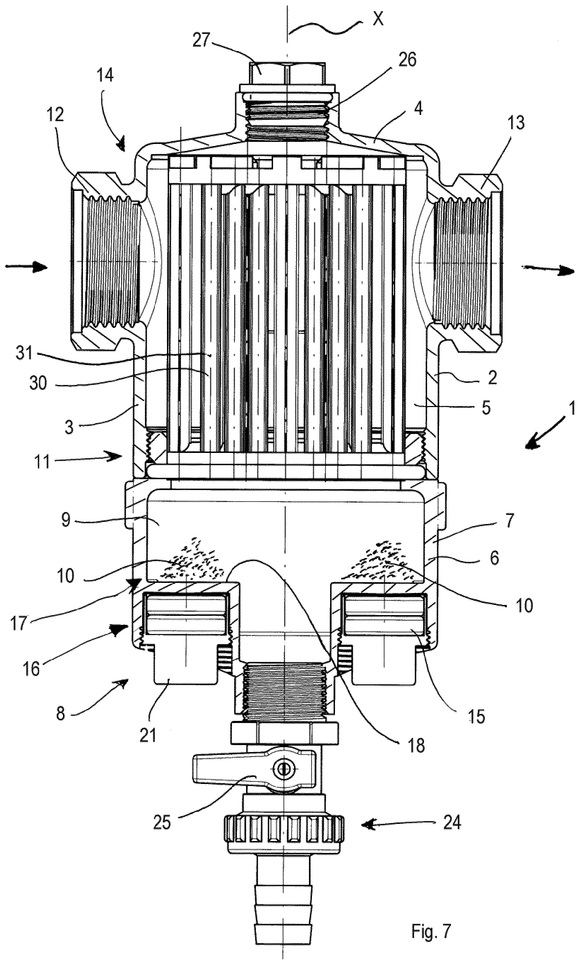

Fig. 7 is a longitudinal section view of the magnetic separator of impurities according to the invention.

With reference to the appended Figures, a magnetic separator of impurities 1 is show, which is suitable to be installed in circuits that are passed through by a fluid, particularly in a thermal plant, such as a heating and/or cooling plant of the household or industrial type.

The magnetic separator of impurities 1 comprises a first hollow body 2 defined by a first side wall 3 and by an upper wall 4 that define together a separation chamber 5 in which ferrous and non-ferrous particles 10 are separated from the fluid circulating in the heating and/or cooling plant.

The magnetic separator of impurities 1 comprises a second hollow body 6 defined by a second side wall 7 and by a bottom wall 8 that define together a quieting and collecting chamber 9 suitable for receiving and storing the above-mentioned particles 10. On the bottom wall 8, within the second hollow body 6, an inner collecting surface 18 is provided, which inferiorly delimits the quieting and collecting chamber 9, which extends transversally to the longitudinal axis X, and on which the particles 10 deposit.

The first hollow body 2 and the second hollow body 6 have particularly a substantially cylindrical shape, and are mutually sealingly connected through a threaded coupling 11 and a gasket 28, so as to be arranged, during operation, one on top of the other, defining a substantially vertical longitudinal axis X. In other terms, during operation, the separation chamber 5 is located superiorly to the quieting and collecting chamber 9.

An inlet 12 and an outlet 13 for the fluid circulating in the plant are provided on the first hollow body 2. In particular, the inlet 12 and the outlet 13 comprise threaded portions for the connection to respective duct portions of the cooling and/or heating plant.

In a non-limiting manner, the inlet 12 and the outlet 13 are diametrically opposite, i.e., they are obtained on the first side wall 3 in mutually opposite zones with respect to the longitudinal axis X. Particularly, the inlet 12 and the outlet 13 are placed so as to face a higher region 14 of the separation chamber 5. In other terms, the inlet 12 and the outlet 13 are located at a region farther from the quieting and collecting chamber 9, so that in the latter the turbulence and dragging actions of the fluid are minimized or even eliminated, so as not to perturb the particles 10 deposited on the inner collecting surface 18.

The inlet 12 and the outlet 13 are configured so that the inlet flow and the outlet flow of the fluid are substantially orthogonal to the longitudinal axis X.

Within the separation chamber 5, a filtering cartridge 30 for the ferrous and non-ferrous particles is housed. The filtering cartridge 30 is of the type comprising a plurality of extended elements 31 for deflecting the flow, which are mutually spaced apart and extending parallel to the longitudinal axis X. The extended elements 31, having a bar shape, are provided with peripheral surfaces for the deflection of the flow that extend longitudinally, and are so shaped as to cause repeated deflections of the fluid and to cause the decantation of particles of impurities dragged by the fluid. The ferrous and non-ferrous particles that, dragged by the fluid, reach into the separation chamber 5 through the inlet 12, are hindered by the filtering cartridge 30. In such a manner, while only fluid is free to leave the separation chamber 5, the ferrous and non-ferrous particles, by virtue of the action of the filtering cartridge 30, are subjected to a decantation and advance by gravity towards the underlying quieting and collecting chamber 9 in which they deposit and are stored, to be periodically evacuated.

The inlet 12 and the outlet 13 are located at a higher zone 14 of the separation chamber 5 and are mutually aligned along a direction orthogonally incident to the longitudinal axis X. Owing to the axial alignment of the inlet 12 to the outlet 13, the pressure drop of the fluid passing through the separation chamber 5 is considerably reduced. Furthermore, such a geometric configuration makes the magnetic separator of impurities 1 particularly suitable to be mounted along the ducts of heating and/or cooling plants of buildings, the magnetic separator of impurities 1 being further able to be mounted in very limited spaces.

The first hollow body 2 and the second hollow body 6, and, consequently, the separation chamber 5 and the quieting and collecting chamber 9 defined thereby, are shaped so that the advancing of the fluid flow and the turbulent movement thereof substantially affect an upper portion of the separation chamber 5, sufficiently far from the quieting and collecting chamber 9. Owing to the considerable reduction of turbulence and of speed of the fluid in the proximity of the quieting and collecting chamber 9, the decantation of the ferrous and non-ferrous particles and the build-up thereof on the collecting surface 18 is thereby promoted.

On the upper wall 4 of the first hollow body 6, a threaded opening 26 is obtained, which can be closed by a removable plug 27, for example for the installation of an automatic vent valve for the air or gases that are present in the fluid circulating in the cooling and/or heating plant.

The magnetic separator of impurities 1 comprises magnet means 15 for attracting and holding the ferrous particles transported by the fluid circulating in the plant.

The magnet means 15 are so configured as to be removably incorporated in a wall portion of the magnetic separator of impurities 1. Particularly, the magnet means 15 are so configured as to be removably enclosed in the bottom wall 8 of the second hollow body 6, and engage with respective seat means 16 obtained in the bottom wall 8.

In the exemplary, non-limiting version shown in the appended drawings, the magnet means comprise two distinct magnet units 15, and the seat means comprise two distinct seats 16, each of which is so shaped as to house a respective magnet unit 15. However, it is possible to provide a different desired number of magnet units 15 and of respective seats 16, instead of two.

The magnet units 15, when they are coupled to the respective seats 16 during the normal operation, are located under the quieting and collecting chamber 9 and outside of the latter.

The seats 16 comprise blind cavities inferiorly open for being able to releasably receive the respective magnet units 15. Such cavities extend, parallel to the longitudinal axis X, up to the proximity of a base region 17 of the quieting and collecting chamber 9. This makes so that the magnet units 15, when housed in the respective seats 16, are as much proximate to the inner collecting surface 18 of the quieting and collecting chamber 9 as possible, the inner collecting surface 18 extending transversally to the longitudinal axis X and on which the particles 10 deposit.

The magnetic attraction exerted by the magnet units 15 promotes the fall and accumulation of the ferrous particles on the collecting surface 18 by firmly holding them on the latter. The holding action exerted by the magnet units 15 is such as to prevent the ferrous particles from being dragged by the fluid flowing in the separation chamber 5. Furthermore, owing to the configuration whereby the magnet unit 15 are removably enclosed the bottom wall 87 so as to be, during operation, located externally and under the quieting and collecting chamber 9, the ferrous particles and the non-ferrous particles deposit by gravity on the collecting surface 18 one on top of the other: in such a manner, the ferrous particles resting on non-ferrous particles secure the latter on the collecting surface 18. In other terms, the non-ferrous particles that are interposed between the collecting surface 18 and the ferrous particles, due to the magnetic attraction force exerted by the underlying magnet units 15, remain immobilized on the bottom wall 8, this preventing them to be dragged by the overlying fluid flow. In such a manner, the action of separation and accumulation of impurities of various kinds, not only of the ferrous type, in the quieting and collecting chamber 9 is thereby improved.

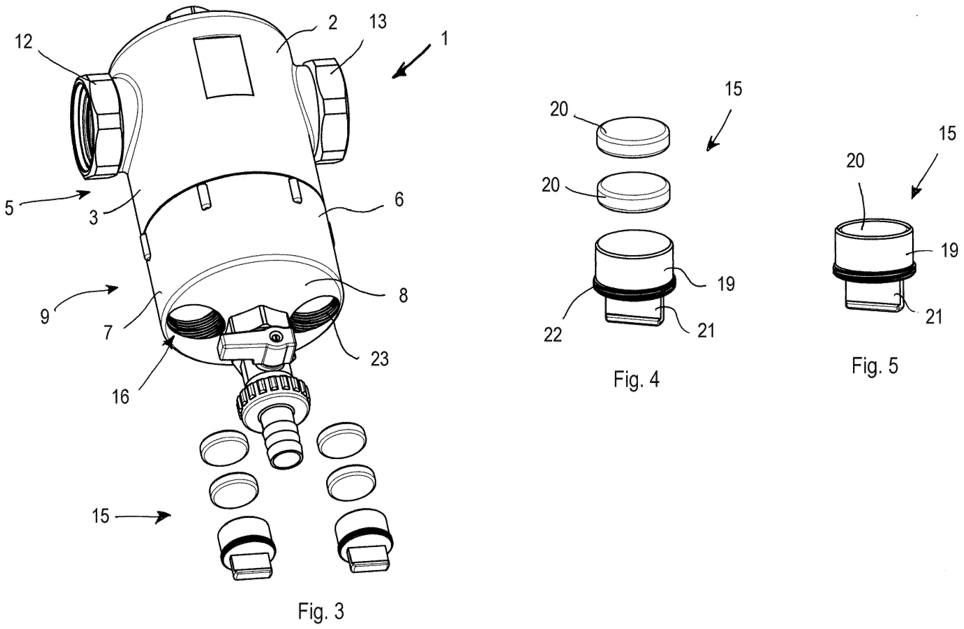

As it is best illustrated in Figs. 4 and 5, each magnet unit 15 comprises a bush element 19 containing one or more permanent magnets 20. In the non-limiting version shown in the appended drawings, the bush element 19 internally defines a cylindrical blind cavity, into which two disc-shaped permanent magnets are incorporated, having a diameter of 20 mm and a height of 5 mm. Different dimensions and a different number of permanent magnets 20 based on specific needs can be also selected.

In order to obtain each magnet unit 15, once the permanent magnet(s) 20 have been introduced in the respective bush element/s 19, the upper edge of the latter is deformed inwardly, so that the permanent magnets 20 are firmly coupled to the bush element 19. In such a manner, during the withdrawing operations of the magnet units 15 from the respective seats 16, the permanent magnets 20 are prevented from being separated from the respective bush elements 19, by the magnetic attraction action between the permanent magnets 20 and the ferrous particles contained within the quieting and collecting chamber 9, or metal parts of the separator.

Each bush element 19 is provided with a threaded portion 22 so shaped as to be coupled with a further threaded portion 23 obtained on the respective seat 16, so as to define a removable screwing coupling between magnet units 15 and the seats 16.

Each bush element 19 comprises inferiorly a gripping protrusion 21, particularly having a lug shape, allowing the respective magnet unit 15 to be gripped, for example by two fingers, to allow the screwing operation in, and unscrewing from, the respective seat 16.

The magnetic separator of impurities 1 comprises a discharge outlet 24, provided inferiorly to the second hollow body 6, in communication with the quieting and collecting chamber 9 and provided with a discharge tap 25 or, alternatively, with a closure plug, for the periodic discharge of the impurities that have been deposited in the quieting and collecting chamber 9.

Particularly, the discharge outlet 24 is located in a central zone of the bottom wall 8, coaxially to the longitudinal axis X, and the two seats 16 are arranged mutually spaced apart and on opposite sides with respect to the discharge outlet 24.

In order to periodically remove the impurities built-up in the quieting and collecting chamber 9, it is sufficient to unscrew the magnet units 15 from the respective seats 16, so as to stop the magnetic attraction action on the particles, and to open the discharge tap 25: in such a manner, the escape of a limited amount of fluid drags therewith the accumulated ferrous and non-ferrous particles 10 outwardly.

Owing to the fact that the quieting and collecting chamber 9, particularly the collecting surface 18, substantially does not suffer from the turbulence and dragging effects of the circulating fluid, it is possible to perform, periodically or at any desired time, i.e., without necessarily waiting for a relevant build-up of particles, the evacuation operations of the impurities accumulated in the quieting and collecting chamber 9 without necessarily stopping the plant, i.e., without having to stop the fluid circulation. In such a manner, owing to the magnetic separator 1 of the invention, it is not necessary to provide suitable valves upstream and downstream thereof to stop the fluid flow.

As results from what has been described with reference to the appended drawings, the magnetic separator of impurities 1 according to the invention achieves the aimed objects.

Variations and/or additions to what has been described above and illustrated in the appended drawings are possible. Various elements can be replaced by further technically equivalent elements, without for this departing from the scope of the invention.

The device can be configured and sized in a desired manner according to the particular application which it is intended to. Furthermore, the materials used for manufacturing the magnetic separator of impurities 1 can be selected according to the needs, provided that they are suitable for the specific intended use.

## Claims

1. Magnetic separator of impurities for a heating and/or cooling plant, comprising:
- wall means (3, 4, 7, 8) defining a first hollow body (2) delimiting a separation chamber (5) for separating ferrous and non-ferrous particles (10) from a fluid circulating in said heating and/or cooling plant, and a second hollow body (6) delimiting a quieting and collecting chamber (9) defined inferiorly by a bottom wall (8) of said wall means (3, 4, 7) and suitable for receiving and storing, on an inner collecting surface (18) provided on said bottom wall (8), said ferrous and non-ferrous particles (10), said separation chamber (5) being configured to house a filtering cartridge (30) suitable to hinder said particles (10) and to cause the decantation thereof towards said quieting and collecting chamber (9);
- said first hollow body (2) and said second hollow body (6) being mutually connected by a sealed threaded coupling (11) so as to be arranged, during operation, one on top of the other thus defining a vertical longitudinal axis (X), with said separation chamber (5) being located superiorly to said quieting and collecting chamber (9),
- an inlet (12) and an outlet (13) for said fluid, obtained in the proximity of said separation chamber (5) and a discharge outlet (24) provided at a lower end of said wall means (3, 4, 7, 8) for evacuating said ferrous and non-ferrous particles (10) from said quieting and collecting chamber (9);
- said inlet (12) and said outlet (13) being arranged on opposite sides with respect to said separation chamber (5), and both in a zone farther from said quieting and collecting chamber (9);
- said inlet (12) and said outlet (13) facing a higher region (14) of said separation chamber (5) and being mutually aligned along a direction that is orthogonally incident on said longitudinal axis (X);
- magnet means (15) for attracting and holding the ferrous particles transported by said fluid;
**CHARACTERIZED IN THAT**
said magnet means (15) are removably enclosed in said wall means by engaging with respective seat means (16) obtained in said bottom wall (8) of said second hollow body (6) so as to be, during operation, removably incorporated in said bottom wall (8) and located externally under said quieting and collecting chamber (9) and so as to attract said ferrous particles in a region farther from said separation chamber (5), far from turbulence and dragging actions of said fluid, wherein said first hollow body (2) and second hollow body (6), and, consequently, said separation chamber (5) and said quieting and collecting chamber (9) defined thereby, are shaped so that the advancing of the fluid-flow and the turbulent movement thereof substantially affect an upper portion of said separation chamber (5), far from said quieting and collecting chamber (9), so that said quieting and collecting chamber (9), particularly said inner collecting surface (18), does not suffer from the turbulence and dragging effects of the circulating fluid, thus enabling an evacuation of the impurities from said quieting and collecting chamber (9) through said discharge outlet (24) without necessarily stopping the fluid circulation in the plant.

2. Magnetic separator of impurities according to claim 1, wherein said seat means (16) comprise one or more blind cavities which are inferiorly open for being able to releasably house said magnet means (15).

3. Magnetic separator of impurities according to claim 2, wherein said one or more cavities extend up to the proximity of a base region (17) of said quieting and collecting chamber (9) parallel to a longitudinal axis (X) defined by said separation chamber (5) and said quieting and collecting chamber (9).

4. Magnetic separator of impurities according to claim 3, wherein said magnet means (15), when housed in said seat means (16), are proximate to an inner collecting surface (18) of said quieting and collecting chamber (9), on which said particles (10) deposit, said collecting surface (18) extending transversally to said longitudinal axis (X).

5. Magnetic separator of impurities according to one of the preceding claims, wherein said magnet means comprise bush means (19) in which permanent magnet elements (20) are contained and fixed.

6. Magnetic separator of impurities according to claim 5, wherein said bush means (19) and, correspondingly, said seat means (16) have a cylindrical shape, said bush means (19) and said seat means (16) being provided with threaded portions (22) and further threaded portions (23), respectively, to obtain a relative removable coupling.

7. Magnetic separator of impurities according to one of the preceding claims, wherein said seat means comprise two seats (16) mutually spaced apart and located on opposite sides with respect to said longitudinal axis (X), and said magnet means comprise two magnet units (15), each magnet unit (15) comprising a bush case (19) containing one or more permanent magnets (20) and provided with a gripping portion (21) to allow the screwing operation in, and unscrewing from, said seats (16).

8. Magnetic separator of impurities according to one of the preceding claims, further comprising said filtering cartridge (30) housed in said separation chamber (5), wherein said filtering cartridge (30) is provided with extended elements (31) that are mutually spaced apart and parallel, provided with peripheral surfaces that are suitable for repeatedly deviating the fluid flow, in order to cause the decantation of said particles (10) and the deposition of the latter in said quieting and collecting chamber (9).

9. Magnetic separator of impurities according to one of the preceding claims, wherein said discharge outlet (24) is provided with a tap (25) drivable to periodically allow the evacuation of said ferrous and non-ferrous particles (10) from said quieting and collecting chamber (9), once said magnet means (15) are removed from said seat means (16), said tap (25) being drivable to open said discharge outlet (24) and to allow the evacuation of said particles (10) even during the operation of said heating and/or cooling plant.

## Patentansprüche

1. Magnetabscheider von Verunreinigungen für eine Heiz- und/oder Kühlanlage, umfassend:
- Wandmittel (3, 4, 7, 8), die einen ersten Hohlkörper (2) definieren, der eine Abscheidekammer (5) zu einer Abscheidung von eisenhaltigen und nichteisenhaltigen Teilchen (10) aus einem in der Heiz- und/oder Kühlanlage zirkulierenden Fluid umgrenzt, und einen zweiten Hohlkörper (6), der eine Ruhe- und Sammelkammer (9) umgrenzt, die unten durch eine Bodenwand (8) der Wandmitteln (3, 4, 7) definiert ist und zur Aufnahme und Lagerung der eisenhaltigen und nicht-eisenhaltigen Teilchen (10) auf einer an der Bodenwand (8) vorgesehenen inneren Sammelfläche (18) geeignet ist, wobei die Abscheidekammer (5) eingerichtet ist, um eine Filterpatrone (30) zu beherbergen, die geeignet ist, die Teilchen (10) zu behindern und deren Dekantieren in Richtung der Ruhe- und Sammelkammer (9) zu bewirken;
- wobei der erste Hohlkörper (2) und der zweite Hohlkörper (6) durch eine abgedichtete Gewindekupplung (11) miteinander verbunden sind, so dass während des Betriebes eine zuoberst auf der anderen angeordnet ist, wodurch sie eine vertikale Längsachse (X) definieren, wobei sich die Abscheidekammer (5) über der Ruhe- und Sammelkammer (9) befindet,
- einen Einlass (12) und einen Auslass (13) für das Fluid, die in der Nähe der Abscheidekammer (5) angeordnet sind und einen Entladeauslass (24), der an einem unteren Ende der Wandmittel (3, 4, 7, 8) zum Evakuieren der eisenhaltigen und nicht-eisenhaltigen Teilchen (10) aus der Ruhe- und Sammelkammer (9) vorgesehen ist;
- wobei der Einlass (12) und der Auslass (13) auf gegenüberliegenden Seiten in Bezug auf die Abscheidekammer (5) und beide in einer Zone entfernt von der Ruhe- und Sammelkammer (9) angeordnet sind;
- wobei der Einlass (12) und der Auslass (13) einem höheren Bereich (14) der Abscheidekammer (5) zugewandt sind und zueinander entlang einer Richtung ausgerichtet sind, die orthogonal auf die Längsachse (X) auftrifft;
- Magnetmittel (15) zum Anziehen und Halten der durch das Fluid transportierten eisenhaltigen Teilchen;
**dadurch gekennzeichnet, dass**
die Magnetmittel (15) entnehmbar in den Wandmitteln eingeschlossen sind, indem sie mit entsprechenden Sitzmitteln (16) in Eingriff stehen, die in der Bodenwand (8) des zweiten Hohlkörpers (6) angeordnet sind, so dass sie während des Betriebs entnehmbar in die Bodenwand (8) eingebaut sind und sich außen unter der Ruhe- und Sammelkammer (9) befinden und so die eisenhaltigen Teilchen in einen von der Abscheidekammer (5) weit von Turbulenz- und Schleppwirkungen des Fluides entfernten Bereich anzuziehen, wobei der erste Hohlkörper (2) und der zweite Hohlkörper (6) und damit die Abscheidekammer (5) und die dadurch definierte Ruhe- und Sammelkammer (9) so geformt sind, dass das Vorrücken des Fluidflusses und deren turbulenter Bewegung einen oberen Teil der Abscheidekammer (5) weit entfernt von der Ruhe- und Sammelkammer (9) beeinflussen, so dass die Ruhe- und Sammelkammer (9), insbesondere die innere Sammelfläche (18), nicht unter den Turbulenzen und Schleppwirkungen des zirkulierenden Fluides leiden, wodurch eine Evakuierung der Verunreinigungen aus der Ruhe- und Sammelkammer (9) durch den Entladeauslass (24) ermöglicht wird, ohne dass die Fluidzirkulation in der Anlage unbedingt gestoppt werden muss.

2. Magnetabscheider von Verunreinigungen nach Anspruch 1, wobei die Sitzmittel (16) einen oder mehrere Blindhohlräume umfassen, die unten offen sind, um die Magnetmittel (15) lösbar aufnehmen zu können.

3. Magnetabscheider von Verunreinigungen nach Anspruch 2, wobei sich der eine oder die mehreren Hohlräume bis in die Nähe eines Basisbereichs (17) der Ruhe- und Sammelkammer (9) parallel zu einer Längsachse (X) erstrecken, die durch die Abscheidekammer (5) und die Ruhe- und Sammelkammer (9) definiert ist.

4. Magnetabscheider von Verunreinigungen nach Anspruch 3, wobei die Magnetmittel (15), wenn sie in den Sitzmitteln (16) beherbergt sind, sich in der Nähe einer inneren Sammelfläche (18) der Ruhe- und Sammelkammer (9) befinden, auf der sich die Teilchen (10) ablagern, wobei sich die Sammelfläche (18) quer zur Längsachse (X) erstreckt.

5. Magnetabscheider von Verunreinigungen nach einem der vorstehenden Ansprüche, wobei die Magnetmittel Buchsenmittel (19) umfassen, in denen Permanentmagnetelemente (20) enthalten und befestigt sind.

6. Magnetabscheider von Verunreinigungen nach Anspruch 5, wobei die Buchsenmittel (19) und entsprechend die Sitzmittel (16) eine zylindrische Form aufweisen, wobei die Buchsenmittel (19) und die Sitzmittel (16) mit einem Gewindeabschnitt (22) beziehungsweise weiteren Gewindeabschnitten (23) versehen sind, um eine relativ entnehmbare Verbindung zu erhalten.

7. Magnetabscheider von Verunreinigungen nach einem der vorstehenden Ansprüche, wobei die Sitzmittel zwei Sitze (16) umfassen, die voneinander beabstandet sind und sich auf gegenüberliegenden Seiten in Bezug auf die Längsachse (X) befinden, und die Magnetmittel zwei Magneteinheiten (15) umfassen, wobei jede Magneteinheit (15) ein Buchsengehäuse (19) umfasst, das einen oder mehrere Permanentmagnete (20) enthält und mit einem Greifabschnitt (21) versehen ist, um den Schraubvorgang in und den Entschraubvorgang aus den Sitzen (16) zu ermöglichen.

8. Magnetabscheider von Verunreinigungen nach einem der vorstehenden Ansprüche, ferner umfassend die Filterkartusche (30), die in der Abscheidekammer (5) untergebracht ist, wobei die Filterkartusche (30) mit verlängerten Elementen (31) versehen ist, die zueinander beabstandet und parallel sind, die mit umlaufenden Flächen versehen sind, die zum wiederholenden Ablenken des Fluidflusses geeignet sind, um das Dekantieren der Partikel (10) und das Ablagern der letzteren in der Ruhe- und Sammelkammer (9) zu bewirken.

9. Magnetabscheider von Verunreinigungen nach einem der vorstehenden Ansprüche, wobei der Entladeauslass (24) mit einem Hahn (25) versehen ist, der antreibbar ist, um periodisch die Evakuierung der eisenhaltigen und nichteisenhaltigen Partikel (10) aus der Ruhe- und Sammelkammer (9) zu ermöglichen, sobald die Magnetmittel (15) von den Sitzmitteln (16) entfernt sind, wird der Hahn (25) antreibbar, um den Entladeauslass (24) zu öffnen und die Evakuierung der Teilchen (10) sogar während des Betriebes der Heiz- und/oder Kühlanlage zu ermöglichen.

## Revendications

1. Séparateur magnétique d'impuretés pour une installation de chauffage et/ou de refroidissement, comprenant :
- des moyens parois (3, 4, 7, 8) définissant un premier corps creux (2) délimitant une chambre de séparation (5) pour séparer des particules ferreuses et non ferreuses (10) d'un fluide circulant dans ladite installation de chauffage et/ou de refroidissement, et un second corps creux (6) délimitant une chambre d'atténuation de bruit et de collecte (9) définie inférieurement par une paroi inférieure (8) desdits moyens parois (3, 4, 7) et appropriée pour recevoir et stocker, sur une surface de collecte intérieure (18) prévue sur ladite paroi inférieure (8), lesdites particules ferreuses et non ferreuses (10), ladite chambre de séparation (5) étant configurée pour loger une cartouche filtrante (30) appropriée pour entraver lesdites particules (10) et pour causer la décantation de celles-ci vers ladite chambre d'atténuation de bruit et de collecte (9) ;
- ledit premier corps creux (2) et ledit second corps creux (6) étant mutuellement raccordés par un accouplement fileté étanche (11) afin d'être agencés, durant le fonctionnement, l'un par-dessus l'autre définissant ainsi un axe longitudinal vertical (X), ladite chambre de séparation (5) étant située supérieurement par rapport à ladite chambre d'atténuation de bruit et de collecte (9),
- une entrée (12) et une sortie (13) pour ledit fluide, obtenues à proximité de ladite chambre de séparation (5) et une sortie d'évacuation (24) prévue à une extrémité inférieure desdits moyens parois (3, 4, 7, 8) pour évacuer lesdites particules ferreuses et non ferreuses (10) de ladite chambre d'atténuation de bruit et de collecte (9) ;
- ladite entrée (12) et ladite sortie (13) étant agencées sur des côtés opposés par rapport à ladite chambre de séparation (5), et les deux dans une zone plus éloignée de ladite chambre d'atténuation de bruit et de collecte (9) ;
- ladite entrée (12) et ladite sortie (13) faisant face à une région plus élevée (14) de ladite chambre de séparation (5) et étant mutuellement alignées le long d'une direction qui est orthogonalement incidente sur ledit axe longitudinal (X) ;
- des moyens aimants (15) pour attirer et retenir les particules ferreuses transportées par ledit fluide ;
**CARACTERISE EN CE QUE**
lesdits moyens aimants (15) sont enfermés de façon amovible dans lesdits moyens parois en entrant en prise avec des moyens sièges respectifs (16) obtenus dans ladite paroi inférieure (8) dudit second corps creux (6) afin d'être, durant le fonctionnement, incorporés de façon amovible dans ladite paroi inférieure (8) et situés extérieurement sous ladite chambre d'atténuation de bruit et de collecte (9) et afin d'attirer lesdites particules ferreuses dans une région plus éloignée de ladite chambre de séparation (5), éloignée d'actions de turbulence et de traînée dudit fluide, dans lequel lesdits premier corps creux (2) et second corps creux (6), et, par conséquent, ladite chambre de séparation (5) et ladite chambre d'atténuation de bruit et de collecte (9) définies par ceux-ci, sont formés pour que l'avance de l'écoulement de fluide et le mouvement turbulent de celui-ci affectent sensiblement une portion supérieure de ladite chambre de séparation (5), éloignée de ladite chambre d'atténuation de bruit et de collecte (9), pour que ladite chambre d'atténuation de bruit et de collecte (9), particulièrement ladite surface de collecte intérieure (18), ne souffre pas des effets de turbulence et de traînée du fluide circulant, permettant ainsi une évacuation des impuretés de ladite chambre d'atténuation de bruit et de collecte (9) à travers ladite sortie d'évacuation (24) sans nécessairement arrêter la circulation de fluide dans l'installation.

2. Séparateur magnétique d'impuretés selon la revendication 1, dans lequel lesdits moyens sièges (16) comprennent une ou plusieurs cavités borgnes qui sont inférieurement ouvertes pour être capables de loger de façon libérable lesdits moyens aimants (15).

3. Séparateur magnétique d'impuretés selon la revendication 2, dans lequel lesdites une ou plusieurs cavités s'étendent vers le haut jusqu'à la proximité d'une région de base (17) de ladite chambre d'atténuation de bruit et de collecte (9) parallèlement à un axe longitudinal (X) défini par ladite chambre de séparation (5) et ladite chambre d'atténuation de bruit et de collecte (9).

4. Séparateur magnétique d'impuretés selon la revendication 3, dans lequel lesdits moyens aimants (15), lorsqu'ils sont logés dans lesdits moyens sièges (16), sont à proximité d'une surface de collecte intérieure (18) de ladite chambre d'atténuation de bruit et de collecte (9), sur laquelle lesdites particules (10) se déposent, ladite surface de collecte (18) s'étendant transversalement audit axe longitudinal (X).

5. Séparateur magnétique d'impuretés selon l'une des revendications précédentes, dans lequel lesdits moyens aimants comprennent des moyens douilles (19) dans lesquels des éléments aimants permanents (20) sont contenus et fixés.

6. Séparateur magnétique d'impuretés selon la revendication 5, dans lequel lesdits moyens douilles (19) et, de façon correspondante, lesdits moyens sièges (16) présentent une forme cylindrique, lesdits moyens douilles (19) et lesdits moyens sièges (16) étant pourvus de portions filetées (22) et de portions filetées supplémentaires (23), respectivement, pour obtenir un accouplement amovible relatif.

7. Séparateur magnétique d'impuretés selon l'une des revendications précédentes, dans lequel lesdits moyens sièges comprennent deux sièges (16) mutuellement espacés l'un de l'autre et situés sur des côtés opposés par rapport audit axe longitudinal (X), et lesdits moyens aimants comprennent deux unités aimants (15), chaque unité aimant (15) comprenant un boîtier douille (19) contenant un ou plusieurs aimants permanents (20) et pourvu d'une portion de préhension (21) pour permettre l'opération de vissage dans lesdits sièges (16), et le dévissage à partir de ceux-ci.

8. Séparateur magnétique d'impuretés selon l'une des revendications précédentes, comprenant en outre ladite cartouche filtrante (30) logée dans ladite chambre de séparation (5), dans lequel ladite cartouche filtrante (30) est pourvue d'éléments étendus (31) qui sont mutuellement espacés les uns des autres et parallèles, pourvus de surfaces périphériques qui sont appropriées pour dévier à plusieurs reprises l'écoulement de fluide, afin de causer la décantation desdites particules (10) et le dépôt de ces dernières dans ladite chambre d'atténuation de bruit et de collecte (9).

9. Séparateur magnétique d'impuretés selon l'une des revendications précédentes, dans lequel ladite sortie d'évacuation (24) est pourvue d'un robinet (25) entraînable pour permettre périodiquement l'évacuation desdites particules ferreuses et non ferreuses (10) de ladite chambre d'atténuation de bruit et de collecte (9), une fois que lesdits moyens aimants (15) sont retirés desdits moyens sièges (16), ledit robinet (25) étant entraînable pour ouvrir ladite sortie d'évacuation (24) et pour permettre l'évacuation desdites particules (10) même durant le fonctionnement de ladite installation de chauffage et/ou de refroidissement.
